# EUROPÄISCHE PATENTSCHRIFT

(11) **EP 1 337 450 B1**
(45) Veröffentlichungstag und Bekanntmachung des Hinweises auf die Patenterteilung: **14.04.2004**
(21) Anmeldenummer: 01992680.7
(22) Anmeldetag: 30.10.2001
(51) Int. Cl.: B65G 49/06, C03B 35/16, B65G 13/10

(54) **TRANSPORTWEICHE FÜR PLATTENMATERIAL-FÖRDERSTRECKE, INSBESONDERE FLACHGLAS-FÖRDERSTRECKE**
TRANSPORT SWITCH FOR A PLATE MATERIAL CONVEYOR LINE, ESPECIALLY A FLAT GLASS CONVEYOR LINE
AIGUILLAGE DE TRANSPORT DESTINE A UNE VOIE DE TRANSPORT DE MATERIAU EN FORME DE PANNEAU, NOTAMMENT UNE VOIE DE TRANSPORT DE VERRE PLAT

(30) Priorität: 30.10.2000 DE 10053852
(43) Veröffentlichungstag der Anmeldung: 27.08.2003
(73) Patentinhaber: Grenzebach Maschinenbau GmbH, 86663 Asbach-Bäumenheim/Hamlar (DE)
(72) Erfinder: VASSEL, Donald, T., Newnan, GA 30265 (US)
(74) Vertreter: Gallo, Wolfgang, Dipl.-Ing. (FH)
(86) Internationale Anmeldenummer: PCT/DE2001/004057
(87) Internationale Veröffentlichungsnummer: WO 2002/036467

(56) Entgegenhaltungen:
- DE-A- 4 339 092
- GB-A- 1 463 036
- US-A- 3 194 417
- US-A- 4 047 625

## Beschreibung

Die Erfindung bezieht sich auf eine Transportweiche für eine Förderstrecke für Rollenförderer-geeignetes Plattenmaterial. Insbesondere findet die Erfindung als Transportweiche für eine Flachglas-Förderstrecke Anwendung. Die Erfindung kann aber auch bei Förderstrecken für andere Plattenmaterialien Anwendung finden, beispielsweise im Baubereich für Rigipsplatten, die in ähnlicher Weise wie Flachglas auf einer Produktionslinie als kontinuierliches Plattenband erzeugt und dann durch Schneiden in einzelne Plattenformate aufgeteilt werden.

Bei der Flachglasproduktion läuft das Glas kontinuierlich in Form eines mehrere Meter breiten Bands aus dem Glasofen aus und gelangt auf eine Förderstrecke, die das Flachglasband mit definierter Fördergeschwindigkeit synchron zur Glasbanderzeugung am Ofenauslaß abfördert. Diese Förderstrecken umfassen von dem Bereich an, wo das Glasband ausreichend abgekühlt worden ist und entsprechende Festigkeit erlangt hat, Rollenförderer. Entlang der Förderstrecke erfolgt zunächst synchron mit der kontinuierlichen Förderbewegung des Glasbands das optische Prüfen des Glases auf Fehler wie Einschlüsse, Gasblasen usw., und deren Markierung, sowie das Querschneiden des Glasbands, üblicherweise unter Rechnersteuerung in unterschiedliche Formate, sowie auch das Längsritzen der durch Querschneiden hergestellten Glastafeln. Durch Beschleunigungsabschnitte in der Förderstrecke werden Abstände zwischen den aufeinanderfolgenden durch Querschneiden entstandenen Glastafeln erzeugt.

Anschließend kann der Materialfluß der Glastafeln, der zum Zwecke der Verschnittoptimierung unter optimaler Aussparung von Glasfehlern in unterschiedliche Formate quergeschnitten und längs geritzt worden ist und daher als formatgrößengemischter Glastafelstrom auf der Förderstrecke befördert wird, mittels Transportweichen auf verschiedene Förderstreckenzweige verteilt werden, um dann beispielsweise ein formatgrößenreines Stapeln der Glastafeln zu ermöglichen. Solche Transportweichen schalten, da wegen des kontinuierlichen Glasplattenflusses die Transportrichtung erst einmal beibehalten werden muß, zwischen einer in der Ebene der Zuförderstrecke gelegenen Förderstreckenzweig und einem über diesem angeordneten parallelen Förderstreckenzweig um.

Bei bekannten Glasproduktionslinien (siehe z.B. US-A-3194417) sind solche Transportweichen als Förderstreckenabschnitte eines Rollenförderers ausgebildet, die zwischen einer horizontalen Betriebsstellung, in der sie die ankommenden Glastafeln auf den in derselben Ebene liegenden Förderstreckenzweig weiterleiten, und einer um das stromaufwärtige Ende in eine Schrägstellung geschwenkten rampenartigen Position umschaltbar, in welcher sie die ankommenden Glastafeln rampenartig auf den oberen Förderstreckenzweig umlenken.

Diese bekannten Transportweichen in herkömmlichen Glasproduktionlinien sind aber nicht frei von Problemen. Zum einen haben die Glastafeln mit etwa 1 Meter pro Sekunde eine bemerkenswerte Geschwindigkeit, und die Förderrichtungsänderung aus der Horizontalen auf der rampenartig angestellten Transportweiche führt zu harten Schlägen an der Vorderkante einer ankommenden Glastafel, und beim Abkippen aus der rampenartig angestellten Transportweiche auf die oben liegende, wieder horizontal verlaufende weitere Förderstrecke treten erneut Beanspruchungen der Glastafel durch Aufschlagen auf die wieder horizontale Förderbahn auf. Dadurch können Glasbrüche auftreten, wobei diese Gefahr insbesondere dadurch gesteigert wird, daß die ankommenden und umgelenkten Glastafeln bereits längs geritzt sind, so daß es gerade dort ungewollt zum Bruch kommen kann. Ein zweites Problem besteht darin, daß die Transportweichen aufgrund der begrenzten möglichen Steilheit der rampenförmigen Stellung eine entsprechende Länge in Transportrichtung haben müssen und ein Umschalten zwischen den beiden Positionen erst möglich ist, nachdem eine ankommende Glastafel die Transportweiche vollständig passiert hat. Dies gilt insbesondere für das Aufschwenken in die rampenartige Stellung. Unter Einschluß der für das Umschalten benötigten Zeit bedeutet dies, daß der Abstand zwischen aufeinanderfolgenden Glastafeln auf der Förderstrecke größer als die Länge der Transportweiche sein muß.

Der Erfindung liegt die Aufgabe zugrunde, eine verbesserte Transportweiche zu schaffen, die beide Probleme herkömmlicher Transportweichen vermeidet, nämlich schlagartige Beanspruchungen der Glastafeln ausschließt und damit die Gefahr der Beschädigung bzw. des Glasbruchs vermeidet und zum anderen kürzere Abstände der auf der Transportstrecke aufeinanderfolgenden Glastafeln ermöglicht, als das bei den herkömmlichen Transportweichen der Fall ist. Die Aufgabe gilt sinngemäß auch für eine Transportweiche für andere Plattenmaterialien als Flachglas, beispielsweise Rigipsplatten, die mechanisch empfindlich sind und bei deren Förderung gleichartige Probleme auftreten.

Diese Aufgabe wird gemäß der Erfindung durch die im Patentenspruch angegebene Anordnung gelöst.

Ein Ausführungsbeispiel der Erfindung wird nachstehend unter Bezugnahme auf die anliegenden Zeichnungen beschrieben, in denen zeigt:
- Fig. 1.: Eine Flachglas-Förderstrecke mit Transportweiche in Seitenansicht in der einen Betriebsstellung,
- Fig. 2: die Anordnung nach Figur 1 mit der Transportweiche in der anderen Betriebsstellung,
- die Figuren 3A bis 3C: die Anordnung in aufeinanderfolgenden Phasen des Rückführens der Transportweiche aus der Betriebsstellung nach Figur 2 in die Betriebsstellung nach Figur 1.

Die Zeichnungen sind sehr schematisch gehalten und sollen nur das Prinzip der Erfindung verdeutlichen.

Die Zeichnungen zeigen eine Flachglas-Förderstrecke in Seitenansicht, mit einem Zuförderzweig 1, einem ersten Abförderzweig 2 in der Ebene des Zuförderzweigs 1, und einem zweiten Abförderzweig 3, der über den ersten Abförderzweig 2 parallel zu diesem angeordnet ist, wobei die beiden Abförderzweige 2 und 3 mit dem Zuförderzweig 1 in Transportrichtung fluchten, und mit einer zwischen dem Zuförderzweig 1 und den Abförderzweigen 2, 3 angeordneten Transportweiche 4. Außerdem sind drei aufeinanderfolgend auf der Förderstrecke transportierte Glastafeln G1, G2, G3 eingezeichnet, um die Wirkungsweise der Transportweiche deutlich werden zu lassen. Die Glastafel G1 soll auf den unteren Abföderzweig 2 geleitet werden, die folgende Glastafel G2 soll auf den oberen Abförderzweig 3 umgeleitet werden, und die dann folgende Glastafel G3 soll wiederum auf den unteren Abförderzweig 2 gelangen.

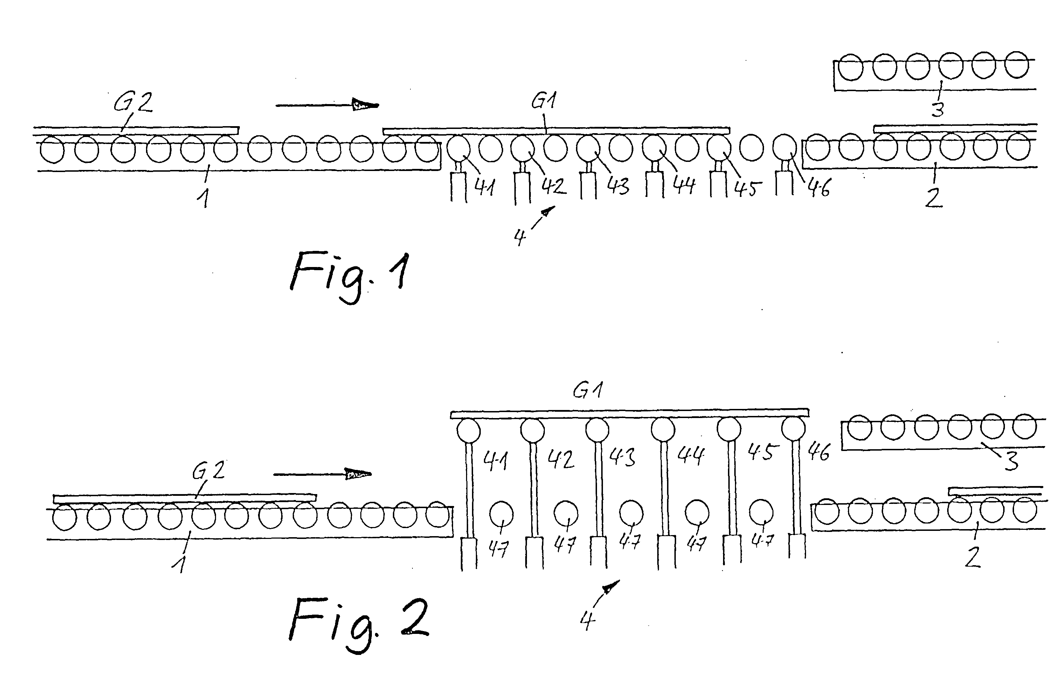

Figur 1 zeigt die Förderstrecke mit der Transportweiche 4 in ihrer einen Betriebsstellung, in welcher sie den Zuförderzweig 1 mit dem damit in gleicher Ebene liegenden unteren Abförderzweig 2 verbindet. Wie man sieht, sind die Abstände zwischen den aufeinanderfolgenden Glastafeln G1, G2, G3 deutlich kleiner als die Länge L der Transportweiche 4. Die Förderrichtung ist durch einen Pfeil markiert. Die vorderste Glastafel G1 hat die Transportweiche 4 schon zum größten Teil passiert und läuft auf den unteren Abförderzweig 2. Die nächstfolgende Glastafel G2 befindet sich schon teilweise auf der Transportweiche 4; ihr folgt die nächstfolgende Glastafel G3 auf dem Zuförderzweig 2.

Figur 2 zeigt die Stellung der Transportweiche 4 in der anderen Betriebsstellung, in welcher die zweite Glastafel G2, während sie in horizontaler Lage verbleibt, auf das Niveau des oberen Abförderzweigs 3 angehoben ist und auf diesen weiterlaufen kann.

Aus Figur 2 wird auch der konstruktive Aufbau der Transportweiche 4 deutlich. Er besteht aus einer Anzahl von in Transportrichtung aufeinanderfolgender kurzer Rollenförderersegmente 41, 42, 43, 44, 45, 46, die in den Zeichnungen jeweils durch eine Förderrolle symbolisch dargestellt sind, und die jeweils einzeln und unabhängig voneinander zwischen der unteren Position (Figur 1) und der oberen Position (Figur 2) anhebbar bzw. absenkbar sind. Diese anhebbaren Transportweichensegmente 41 bis 46 können, wie in den Zeichnungen dargestellt, jeweils abwechselnd mit feststehenden kurzen Rollenfördererabschnitten 47 angeordnet sein oder unmittelbar aufeinanderfolgen. Sie umfassen jeweils angetriebene Förderrollen, so daß die Transportbewegung einer auf der Transportweiche befindlichen Glastafel, hier der Glastafel G2, auch während des Anhebens der Transportweichensegmente kontinuierlich weiter geht.

Das Anheben und Absenken der Transportweichensegmente 41 bis 46 erfolgt rechnergesteuert synchron mit dem Transport der Glastafeln auf der Förderstrecke und gegebenenfalls unter Berücksichtigung der Größe der einzelnen Glastafeln bzw. deren Länge in Förderrichtung.

Das Anheben der Transportweichensegmente 41 bis 46 erfolgt gleichzeitig und synchron, sobald die betreffende Glastafel G2 sich weitgehend bzw. in ausreichendem Maße auf dem Transportweichenbereich befindet, um angehoben werden zu können.

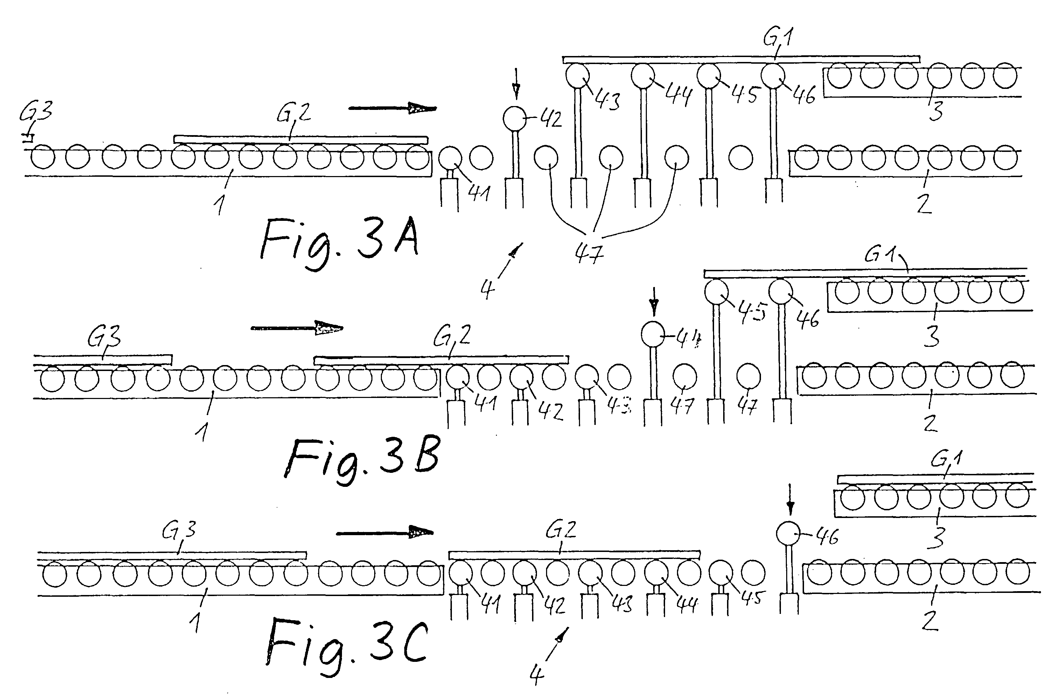

Das Absenken der Transportweichensegmente wieder in die untere Position erfolgt jedoch nicht mehr gleichzeitig, sondern gestaffelt, also einzeln nacheinander und synchron mit der Weiterbewegung der von den Transportweichensegmenten angehobenen Glastafel G2. Sobald die betreffende Glastafel mit ihrem rückwärtigem Endbereich das betreffende Transportweichensegment verlassen hat, erfolgt dessen Absenkung in die untere Position. Die Figuren 3A bis 3C zeigen schlaglichtartig drei Phasen des Rückführvorgangs der Transportweiche in die untere Position während der Weiterbewegung der Glastafeln auf der Förderstrecke. Dabei zeigen die Figuren 3B und 3C, wie die nächstfolgende Glastafel G3 schon in den Transportweichenbereich einläuft, während noch der Auslauf der auf den oberen Abführzweig 3 umgeleiteten Glastafel G2 aus dem Transportweichenbereich im Gange ist.

Mit der erfindungsgemäß ausgebildeten Transportweiche könnte auch, was bei den herkömmlichen, in eine Rampenstellung umschaltbaren Transportweichen nicht möglich ist, eine Materialflußaufteilung auf 3 Abförderzweige realisiert werden, indem zwei Abförderzweige in zwei Etagen über dem mit dem Zuförderzweig ebenen gleichen Abförderzweig angeordnet werden, und auch ein unter dem mit dem Zuförderzweig ebenen gleichen Abförderzweig angeordneter Abförderzweig wäre denkbar.

## Patentansprüche

1. Transportweiche für Plattenmaterial-Förderstrecken, zum Umschalten des Plattenmaterial-Förderstroms zwischen einem Zuförderzweig (1) der Transportstrecke und mindestens zwei Abförderzweigen (2, 3), die mit dem Zuförderzweig (1) in Förderrichtung fluchtend angeordnet sind und von denen der eine Abförderzweig (2) in der gleichen Ebene wie der Zuförderzweig (1) liegt und der andere Abförderzweig (3) in einer dazu höhenversetzten Ebene liegt, wobei die Transportweiche (4) durch eine in Förderrichtung aufeinanderfolgende Mehrzahl kurzer Förderstreckensegmente (41 bis 46) gebildet ist, die einzeln zwischen dem Niveau des ersten Abförderzweigs (2) und dem Niveau des zweiten Abförderzweigs (3) bewegbar sind, und wobei diese Segmente zum Überführen einer Platte vom Zuförderzweig (1) auf den höhenmäßig versetzten Abförderzweig (3) gemeinschaftlich und synchron höhenverstellbar und synchron mit dem Ablaufen der Platte auf den höhenversetzten Abförderzweig (3) nacheinander einzeln auf das Niveau des Zuförderzweigs (1) rückführbar sind.

## Claims

1. Transport points for conveyor lines for plate materials, for switching the flow of plate material between a supply branch (1) and at least two discharge branches (2, 3) which are arranged aligned with the supply branch (1) in the transport direction and of which the one discharge branch (2) is situated in the same plane as the supply branch (1) and the other discharge branch (3) lies at a level offset in height, in which the transport points (4) are formed by a multiplicity of short conveyor line segments (41 to 46) which are arranged successively in the transport direction and can be moved individually between the level of the first discharge branch (2) and the level of the second discharge branch (3), and in which these segments can be height-adjusted together and in synchrony for transferring a plate from the supply branch (1) to the height-offset discharge branch (3) and can be returned individually and successively to the level of the supply branch (1) in synchrony with the exit of the plate into the height-offset discharge branch (3).

## Revendications

1. Aiguillage de transport destiné à une voie de transport de matériau en forme de panneau, pour transférer le flux de transport de matériau en plaque d'une voie d'entrée (1) de la voie de transport vers au moins deux voies de sortie (2, 3) qui sont alignées avec la voie d'entrée (1) dans la direction de transport et parmi lesquelles l'une des voies de sortie (2) est située dans le même plan que la voie d'entrée (1) et l'autre voie de sortie (3) est située dans un plan décalé en hauteur par rapport à celle-ci, l'aiguillage de transport (4) étant formé d'une pluralité de segments de voie de transport (41 à 46) de faible longueur disposés les uns à la suite des autre dans la direction de transport, qui peuvent être déplacés individuellement entre le niveau de la première voie de sortie (2) et le niveau de la deuxième voie de sortie (3), lesdits segments, pour transférer un panneau de la voie d'entrée (1) sur la voie de sortie (3) décalée en hauteur, pouvant être déplacés en hauteur ensemble et de manière synchronisée et ramenés de manière synchronisée avec l'avance du panneau sur la voie de sortie (3) décalée en hauteur, individuellement, l'un après l'autre, au niveau de la voie d'entrée (1).
